# EUROPÄISCHE PATENTSCHRIFT

(11) **EP 3 242 804 B1**
(45) Veröffentlichungstag und Bekanntmachung des Hinweises auf die Patenterteilung: **09.01.2019**
(21) Anmeldenummer: 15791653.7
(22) Anmeldetag: 11.11.2015
(51) Int. Cl.: B60C 11/13

(54) **FAHRZEUGLUFTREIFEN**
PNEUMATIC VEHICLE TIRE
PNEUMATIQUE DE VÉHICULE

(30) Priorität: 09.01.2015 DE 102015200207
(43) Veröffentlichungstag der Anmeldung: 15.11.2017
(73) Patentinhaber: Continental Reifen Deutschland GmbH, 30165 Hannover (DE)
(72) Erfinder: HEINHAUPT, Torsten, 29313 Hambühren (DE)
(74) Vertreter: Finger, Karsten
(86) Internationale Anmeldenummer: PCT/EP2015/076277
(87) Internationale Veröffentlichungsnummer: WO 2016/110348

(56) Entgegenhaltungen:
- EP-A1- 1 974 957
- JP-A- 2010 126 046

## Beschreibung

Die Erfindung betrifft einen Fahrzeugluftreifen mit einem Laufstreifen, welcher zumindest eine schulterseitige Profilblockreihe aufweist, deren Profilblöcke in Umfangsrichtung voneinander durch Querrillen getrennt sind, wobei die Blöcke dieser Blockreihe jeweils miteinander über einen die Querrille überbrückenden Verbindungssteg verbunden sind, welcher zum Querrillengrund zwei abfallende seitliche Flanken aufweist, zwischen den Blockflanken der einander benachbarten Profilblöcke zumindest im Wesentlichen in Umfangsrichtung und entlang des Rillengrundes verläuft und bis in eine maximale Höhe von bis zu 70% der Querrillentiefe reicht, wobei die seitlichen Flanken des Verbindungssteges treppenartig gestuft ausgeführt sind.

Fahrzeugluftreifen mit derartigen Laufstreifen sind in unterschiedlichen Ausführungsvarianten bekannt. Die zwischen den Profilblöcken der schulterseitigen Blockreihen ausgebildeten Verbindungsstege verbessern die Stabilität der schulterseitigen Profilblöcke, insbesondere unter höherer Last. Die Verbindungsstege sind im Querschnitt gerundet ausgeführte Gummiteile mit zum Querrillengrund abfallenden seitlichen Flanken.

Ein Fahrzeugluftreifen der eingangs genannten Art ist beispielsweise aus der EP 1 974 957 A1 bekannt. Die Verbindungsstege, welche die Querrillen in der schulterseitigen Profilblockreihe überbrücken, weisen eine Höhe von 30% bis 90% der Querrillentiefe und an ihrer am Rillengrund liegenden Basis eine Breite von bis zu 70% der Breite der Profilblockreihe auf.

Aus der JP 2010 126 046 A ist ein Fahrzeugluftreifen mit einem Laufstreifen mit mittleren Profilblockreihen mit durch Querrillen voneinander getrennten Blöcken bekannt. In jeder Querrille ist ein die jeweiligen Blöcke miteinander verbindender, die Querrille überbrückender Verbindungssteg ausgebildet. Der Verbindungssteg ist, im Querschnitt betrachtet, im Wesentlichen rechteckig, weist in radialer Richtung eine Höhe von 30% bis 50% der Querrillentiefe und in axialer Richtung eine Breite von 50% bis 70% der Breite der Profilblockreihe auf.

Der Erfindung liegt die Aufgabe zu Grunde, die Funktionalität dieser Verbindungsstege zu verbessern bzw. zu erweitern.

Gelöst wird die gestellte Aufgabe erfindungsgemäß dadurch, dass sich der Verbindungssteg unter einem Winkel von 20° bis 30° zur Umfangsrichtung erstreckt und dass die Stufenflächen der Stufen eine Breite von 0,7 mm bis 1,3 mm aufweisen.

Die erfindungsgemäße Maßnahme erweitert die Funktionalität der Verbindungsstege, da sie nun in der Lage sind, sich mit weichem Untergrund, wie beispielsweise Schnee, Schneematsch, aber auch sonstigem Matsch, zu verzahnen. Diese Verzahnung erhöht den mechanischen Widerstand des Laufstreifens auf einem derartigen Untergrund und somit beispielsweise den Schneegriff, insbesondere in Querrichtung. Ein guter Verzahnungseffekt wird ferner dadurch unterstützt, dass die Stufenflächen der Stufen eine Breite von 0,7 mm bis 1,3 mm aufweisen. Die Winkelstellung der Verbindungsstege vergrößert die Länge der Stufenflächen und ist daher für einen guten Verzahnungseffekt ebenfalls von Vorteil.

Bei einer bevorzugten Ausführungsform der Erfindung weisen die seitlichen Flanken des Verbindungssteges jeweils zwei bis fünf, vorzugsweise mindestens drei Stufen auf. Für einen guten Verzahnungseffekt ist eine größere Anzahl von Stufen besonders vorteilhaft.

Für den Stabilisierungseffekt der Verbindungsstege ist es ferner günstig, wenn die Verbindungsstege jeweils eine parallel zur Laufstreifenoberfläche verlaufende Oberfläche aufweisen, deren Breite 3 mm bis 6 mm beträgt, und wenn die Breite des Verbindungssteges an seiner Basis das 2- bis 3-Fache der Breite der Oberfläche beträgt.

Der mechanische Widerstand und damit der Verzahnungseffekt der Verbindungsstege lassen sich durch weitere Maßnahmen positiv beeinflussen. Zu diesen Maßnahmen gehört, dass die äußeren Flächen des Verbindungssteges mit einer rauen Struktur versehen sind und ferner, dass die Stufenflächen und die Oberfläche des Verbindungssteges mit Mikroeinschnitten einer Breite und Tiefe von 0,2 mm bis 0,3 mm versehen sind.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 eine Ausführungsform der Erfindung anhand einer Draufsicht auf eine Teilabwicklung eines schulterseitigen Bereiches eines Laufstreifens eines Fahrzeugluftreifens und
Fig. 2 eine Schnittdarstellung entlang der Linie Ia-Ia der Fig. 1.

Die Erfindung befasst sich mit einer besonders vorteilhaften Ausgestaltung von Verbindungsstegen in Querrillen zwischen Profilblöcken von Schulterblockreihen von Laufstreifen für Fahrzeugluftreifen in Radialbauart, insbesondere Reifen für Personenkraftwagen oder Light-Trucks, wie Pickups. Erfindungsgemäß ausgeführte Fahrzeugluftreifen sind vor allem für den Einsatz unter winterlichen Fahrbedingungen, wie Schnee oder Schneematsch, aber auch für den Einsatz auf sonstigen weichen Untergründen vorgesehen und besonders gut geeignet.

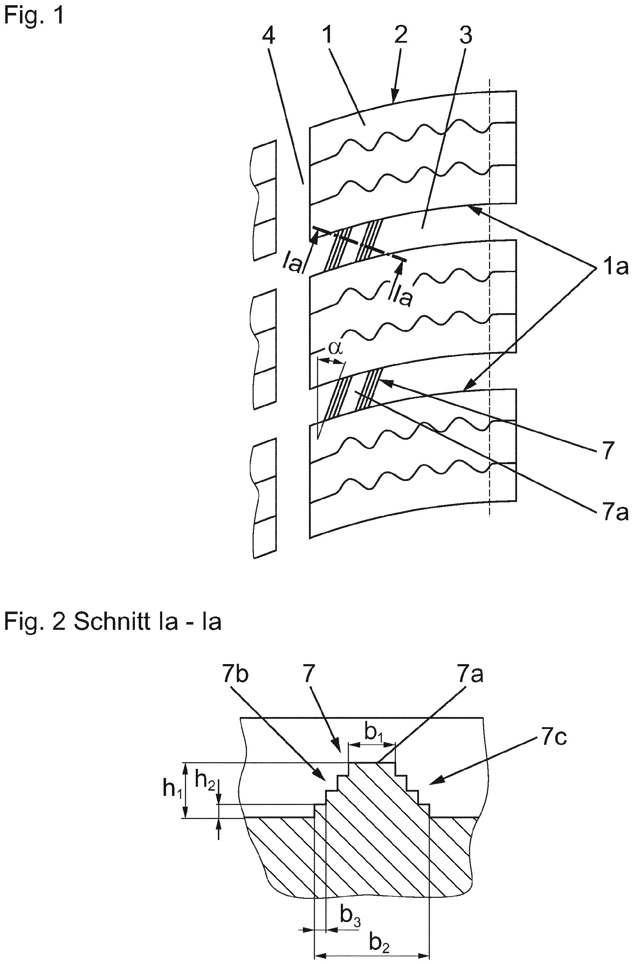

Fig. 1 zeigt schematisch mehrere Profilblöcke 1 einer schulterseitig gelegenen Profilblockreihe 2, die strichlierte Linie symbolisiert den seitlichen Rand der Bodenaufstandsfläche des Laufstreifens. Die Profilblockreihe 2 ist durch eine Umfangsrille 4 von den weiteren vorgesehenen Profilstrukturen, die nicht Gegenstand der Erfindung sind, getrennt. Zwischen den Profilblöcken 1 verlaufen Querrillen 3, die bei der gezeigten Ausführung an der Laufstreifenoberfläche von leicht bogenförmig gekrümmten Profilblockkanten begrenzt sind, über den Laufstreifenrand hinaus verlaufen, schulterseitig auslaufen und laufstreifeninnenseitig in die Umfangsrille 4 münden. Die Querrillen 3 in der Schulterblockreihe 2 verlaufen im Wesentlichen bzw. nahezu in axialer Richtung, insbesondere unter einem kleinen spitzen Winkel von bis zu 30° zur axialen Richtung.

Fig. 1 zeigt ferner in den Profilblöcken 1 ausgebildete und beispielhaft zickzack- bzw. wellenförmig und parallel zu den Querrillen 3 verlaufende Einschnitte 6, die eine Breite von 0,4 mm bis 0,6 mm aufweisen.

Jede Querrille 3 ist von zwei Profilblockflanken 1a begrenzt, welche entweder in radialer Richtung verlaufen oder mit der radialen Richtung einen Winkel von bis zu 10°, insbesondere von etwa 4°, einschließen, derart, dass die Breite der Querrille 3 am Rillengrund etwas geringer ist als an der Laufstreifenoberfläche. Jeder Profilblock 1 ist mit seinem benachbarten Profilblock 1 über einen unmittelbar am Rillengrund ausgebildeten Verbindungssteg 7 verbunden, welcher jeweils die betreffenden Profilblockflanken 1a miteinander verbindet und dessen maximale Höhe h₁ ausgehend vom Grund der Querrille 3 40 % bis 70 % der Querrillentiefe an der Mündungsstelle der jeweiligen Querrille 3 in die Umfangsrille 4 entspricht. Die Verbindungsstege 7 verlaufen unter einem Winkel α zur Umfangsrichtung, welcher zwischen 0° und 30°, insbesondere 20° bis 30°, beträgt, in Fig. 1 ist α etwa 25°. Die Verbindungsstege 7 sind innerhalb der bei der Umfangsrille 4 beginnenden ersten Hälfte der Erstreckung der Querrillen 3 angeordnet und weisen eine im Wesentlichen parallel zur Laufstreifenoberfläche verlaufende Oberfläche 7a und von dieser in Richtung Rillengrund verlaufende Flanken 7b, 7c auf, die treppenartig mit Stufen versehen sind, sodass die Breite jedes Verbindungssteges 7 beginnend bei der Oberfläche 7a bis zum Rillengrund schritt- bzw. stufenweise größer wird. Pro Flanke 7b, 7c sind jeweils zumindest zwei Stufen, vorzugsweise bis zu fünf Stufen, bei der gezeigten Ausführung vier Stufen, vorgesehen, wobei die Stufe zur Oberfläche 7a mitgezählt wird. Bei einer bevorzugten Ausführungsform der Erfindung weisen die Stufen Stufenflächen mit gleichen Höhen und gleichen Breiten auf. Wie insbesondere die Schnittdarstellung in Fig. 2 zeigt, weist die Oberfläche 7a eine über ihre Erstreckung insbesondere konstante Breite b₁ von 3 mm bis 6 mm auf, die Breite b₂ des Verbindungssteges 7 an seiner Basis, dem Grund der Querrillen 3, beträgt das 2- bis 3-Fache der Breite b₁. Die Breiten b₁ und b₂ werden senkrecht zur Erstreckungsrichtung der Verbindungsstege 7 ermittelt. Die Breite b₃ der Stufenflächen beträgt von 0,7 mm bis 1,3 mm, insbesondere etwa 1 mm. Die Höhe h₂ der Stufen beträgt von 1 mm bis 2 mm.

Die Verbindungsstege 7 bewirken vorrangig eine gegenseitige Stabilisierung und Abstützung der schulterseitigen Profilblöcke 1. Durch ihre stufige Ausgestaltung sorgen sie darüber hinaus für einen vorteilhaften Verzahnungseffekt auf Schnee, Schneematsch, aber auch auf sonstigem matschigem Untergrund. Die Flächen der Verbindungsstege 7 können ferner mit einer Mikrostruktur, also mit einer rauen Oberfläche, versehen sein, um derart zusätzlich der mechanischen Widerstand und den Verzahnungseffekt zu erhöhen. Des Weiteren ist es möglich, an den Stufenflächen und der Oberfläche 7a der Verbindungsstege 7 sehr schmale, beispielsweise 0,2 mm bis 0,3 mm breite und ebenso tiefe Mikroeinschnitte auszubilden.

### Bezugsziffernliste

1....................... Profilblock
1a ..................... Profilblockflanke
2 ....................... Profilblockreihe
3, ...................... Querrille
4 ....................... Umfangsrille
5 ....................... Profilblockreihe
6 ....................... Einschnitt
7 ....................... Verbindungsssteg
7a ..................... Oberfläche
7b, 7c ............... Flanke
b₁, b₂, b₃ ........... Breite
h₁, h₂ ................ Höhe
α ...................... Winkel

## Patentansprüche

1. Fahrzeugluftreifen mit einem Laufstreifen, welcher zumindest eine schulterseitige Profilblockreihe (2) aufweist, deren Profilblöcke (1) in Umfangsrichtung voneinander durch Querrillen (3) getrennt sind, wobei die Blöcke (1) dieser Blockreihe (2) jeweils miteinander über einen die Querrille (3) überbrückenden Verbindungssteg (7) verbunden sind, welcher zum Querrillengrund zwei abfallende seitliche Flanken (7b, 7c) aufweist, zwischen den Blockflanken (1a) der einander benachbarten Profilblöcke (1) zumindest im Wesentlichen in Umfangsrichtung und entlang des Rillengrundes verläuft und in eine maximale Höhe (h₁) von bis zu 70% der Querrillentiefe reicht, wobei die seitlichen Flanken (7b, 7c) des Verbindungssteges (7) treppenartig gestuft ausgeführt sind,
**dadurch gekennzeichnet, dass** sich der Verbindungssteg (7) unter einem Winkel (α) von 20° bis 30° zur Umfangsrichtung erstreckt und dass die Stufenflächen der Stufen eine Breite (b₃) von 0,7 mm bis 1,3 mm aufweisen.

2. Fahrzeugluftreifen nach Anspruch 1, **dadurch gekennzeichnet, dass** die seitlichen Flanken (7b, 7c) des Verbindungssteges (7) jeweils zwei bis fünf, vorzugsweise mindestens drei, Stufen aufweisen.

3. Fahrzeugluftreifen nach Anspruch 1 oder 2, **dadurch gekennzeichnet, dass** der Verbindungssteg (7) eine parallel zur Laufstreifenoberfläche verlaufende Oberfläche (7a) aufweist, deren Breite (b₁) 3 mm bis 6 mm beträgt.

4. Fahrzeugluftreifen nach einem der Ansprüche 1 bis 3, **dadurch gekennzeichnet, dass** die Stufenhöhe (h₂) 1 mm bis 2 mm beträgt.

5. Fahrzeugluftreifen nach einem der Ansprüche 1 bis 4, **dadurch gekennzeichnet, dass** die Breite (b₂) des Verbindungssteges (7) an seiner Basis das 2- bis 3-Fache der Breite (b₁) der Oberfläche (7a) beträgt.

6. Fahrzeugluftreifen nach einem der Ansprüche 1 bis 5, **dadurch gekennzeichnet, dass** die äußeren Flächen des Verbindungssteges (7) mit einer rauen Struktur versehen sind.

7. Fahrzeugluftreifen nach einem der Ansprüche 1 bis 6, **dadurch gekennzeichnet, dass** die Stufenflächen und die Oberfläche (7a) des Verbindungssteges (7) mit Mikroeinschnitten einer Breite und Tiefe von 0,2 mm bis 0,3 mm versehen sind.

## Claims

1. Pneumatic vehicle tyre, comprising a tread, which has at least one shoulder-side row of tread bars (2), the tread bars (1) of which are separated from one another in the circumferential direction by transverse grooves (3), wherein the bars (1) of this row of bars (2) are in each case connected to one another by means of a connecting web (7), which bridges the transverse groove (3), has with respect to the transverse-groove base two descending lateral flanks (7b, 7c), runs between the bar flanks (1a) of the mutually adjacent tread bars (1) at least substantially in the circumferential direction and along the groove base and reaches a maximum height (h₁) of up to 70% of the transverse-groove depth, the lateral flanks (7b, 7c) of the connecting web (7) being stepped in the manner of a staircase, **characterized**
**in that** the connecting web (7) extends at an angle (α) of 20° to 30° to the circumferential direction and in that the step faces of the steps have a width (b₃) of 0.7 mm to 1.3 mm.

2. Pneumatic vehicle tyre according to Claim 1, **characterized in that** the lateral flanks (7b, 7c) of the connecting web (7) have in each case two to five, preferably at least three, steps.

3. Pneumatic vehicle tyre according to Claim 1 or 2, **characterized in that** the connecting web (7) has a surface (7a) which runs parallel to the surface of the tread and the width (b₁) of which is 3 mm to 6 mm.

4. Pneumatic vehicle tyre according to one of Claims 1 to 3, **characterized in that** the step height (h₂) is 1 mm to 2 mm.

5. Pneumatic vehicle tyre according to one of Claims 1 to 4, **characterized in that** the width (b₂) of the connecting web (7) at its base is 2 to 3 times the width (b₁) of the surface (7a).

6. Pneumatic vehicle tyre according to one of Claims 1 to 5, **characterized in that** the outer faces of the connecting web (7) are provided with a rough structure.

7. Pneumatic vehicle tyre according to one of Claims 1 to 6, **characterized in that** the step faces and the surface (7a) of the connecting web (7) are provided with micro-sipes of a width and depth of 0.2 mm to 0.3 mm.

## Revendications

1. Pneumatique de véhicule comprenant une bande de roulement qui comporte au moins une rangée de blocs profilés (2) côté épaulement dont les blocs profilés (1) sont séparés les uns des autres par des rainures transversales (3) dans la direction circonférentielle, les blocs (1) de cette rangée de blocs (2) étant reliés entre eux par une nervure de liaison (7) qui ponte la rainure transversale (3), qui comporte deux flancs latéraux inclinés (7b, 7c) par rapport au fond de rainure transversale, qui s'étend entre les flancs de bloc (1a) des blocs profilés adjacents (1) au moins sensiblement dans la direction circonférentielle et le long du fond de rainure et qui atteint une hauteur maximale (h₁) allant jusqu'à 70% de la profondeur de la rainure transversale, les flancs latéraux (7b, 7c) de la nervure de liaison (7) étant réalisés à la manière de marches d'escalier,
**caractérisé en ce que** la nervure de liaison (7) fait un angle (α) de 20° à 30° avec la direction circonférentielle et **en ce que** les surfaces des marches ont une largeur (b₃) de 0,7 mm à 1,3 mm.

2. Pneumatique de véhicule selon la revendication 1, **caractérisé en ce que** les flancs latéraux (7b, 7c) de la nervure de liaison (7) comportent chacun deux à cinq, de préférence au moins trois, marches.

3. Pneumatique de véhicule selon la revendication 1 ou 2, **caractérisé en ce que** la nervure de liaison (7) comporte une surface (7a) qui s'étend parallèlement à la surface de bande de roulement et dont la largeur (b₁) est comprise entre 3 mm et 6 mm.

4. Pneumatique de véhicule selon l'une des revendications 1 à 3, **caractérisé en ce que** la hauteur de marche (h₂) est comprise entre 1 mm et 2 mm.

5. Pneumatique de véhicule selon l'une des revendications 1 à 4, **caractérisé en ce que** la largeur (b₂) de la nervure de liaison (7) au niveau de sa base est de 2 à 3 fois la largeur (b₁) de la surface (7a).

6. Pneumatique de véhicule selon l'une des revendications 1 à 5, **caractérisé en ce que** les surfaces extérieures de la nervure de liaison (7) sont pourvues d'une structure rugueuse.

7. Pneumatique de véhicule selon l'une des revendications 1 à 6, **caractérisé en ce que** les surfaces de marche et la surface (7a) de la nervure de liaison (7) sont munies de micro-découpes d'une largeur et d'une profondeur de 0,2 mm à 0,3 mm.
